# EUROPÄISCHE PATENTSCHRIFT

(11) **EP 4 259 399 B1**
(45) Veröffentlichungstag und Bekanntmachung des Hinweises auf die Patenterteilung: **06.11.2024**
(21) Anmeldenummer: 21838995.5
(22) Anmeldetag: 07.12.2021
(51) Int. Cl.: B27N 1/00, B27N 1/02, B27N 3/00, B27N 3/04, B27N 3/12, D04H 1/541, E04B 1/78, E04C 2/16, E04F 15/20

(54) **VERFAHREN ZUR HERSTELLUNG VON HOLZFASERDÄMMSTOFFPRODUKTEN UND HOLZFASERDÄMMSTOFFPRODUKT**
METHOD FOR PRODUCING WOOD FIBER INSULATING MATERIAL PRODUCTS, AND WOOD FIBER INSULATING MATERIAL PRODUCT
PROCÉDÉ DE FABRICATION DE PRODUITS ISOLANTS EN FIBRES DE BOIS ET PRODUIT ISOLANT EN FIBRES DE BOIS

(30) Priorität: 08.12.2020 DE 102020132552
(43) Veröffentlichungstag der Anmeldung: 18.10.2023
(73) Patentinhaber: Fraunhofer-Gesellschaft zur Förderung der angewandten Forschung e.V., 80686 München (DE)
(72) Erfinder: RITTER, Nina, 38104 Braunschweig (DE); RECK, Christian, 31535 Neustadt am Rübenberge (DE); MEINLSCHMIDT, Peter, 38112 Braunschweig (DE)
(74) Vertreter: Gramm, Lins & Partner Patent- und Rechtsanwälte PartGmbB
(86) Internationale Anmeldenummer: PCT/EP2021/084540
(87) Internationale Veröffentlichungsnummer: WO 2022/122713

(56) Entgegenhaltungen:
- EP-A1- 2 743 292
- EP-A2- 2 048 295
- WO-A1-2020/068151
- DE-A1- 10 056 829
- US-A1- 2010 272 938

## Beschreibung

Die Erfindung betrifft ein Verfahren zur Herstellung von flexiblen oder elastischen Holzfaserdämmstoffprodukten, bei dem Holzfasern, die in einem Refiner erzeugt wurden, ebenso wie Mehrkomponentenfasern mit einer inneren und einer äußeren Komponente bereitgestellt werden, wobei die äußere Komponente bei einer Schmelztemperatur schmilzt oder anschmilzt, bei der die innere Komponente nicht schmilzt oder anschmilzt und bei dem eine Mischung aus Holzfasern und Mehrkomponentenfasern auf eine Temperatur erwärmt wird, bei der die äußere Komponente schmilzt oder anschmilzt und die Mehrkomponentenfasern miteinander und/oder mit den Holzfasern bei Abkühlen der Mischung verbunden werden. Die Erfindung betrifft ebenfalls ein Holzfaserdämmstoffprodukt mit Holzfasern, die in einem Refiner erzeugt wurden, und Mehrkomponentenfasern mit einer inneren und einer äußeren Komponente, wobei die äußere Komponente bei einer Schmelztemperatur schmilzt oder anschmilzt, bei der die innere Komponente nicht schmilzt oder anschmilzt und die Holzfasern und Mehrkomponentenfasern durch Erwärmen und Schmelzen oder Anschmelzen der äußeren Komponente und abschließendes Abkühlen miteinander verbunden sind. Holzwerkstoffplatten sind beispielsweise Spanplatten, oriented strand board (OSB)-Platten sowie mitteldichte und hochdichte Faserplatten, sogenannte MDF- und HDF-Platten. Diese werden unter Verwendung von Holzspänen oder Holzfasern hergestellt, die mit duroplastischen Bindemitteln gemischt und in der Regel in einer Kontipresse unter hohem Druck und hohen Temperaturen zu einem formstabilen Plattenwerkstoff gepresst werden. Solche Holzwerkstoffplatten werden in der Regel als Strukturbauteile, Schalungselemente, Bodenbelege, Wandpaneele oder dergleichen eingesetzt und weisen eine vergleichsweise hohe Festigkeit bei leichter Bearbeitbarkeit und großer Widerstandsfähigkeit gegen Schädlingsbefall auf. Darüber hinaus können Holzwerkstoffplatten mit geeigneten Additiven versehen werden, um die Brandschutzauflagen zu erfüllen. Holzwerkstoffplatten werden in einem Nassverfahren oder in einem Trockenverfahren hergestellt.

Während bereits Massivholz über gute Wärmedämmeigenschaften verfügt, kann man durch Erhöhen der Porigkeit in Werkstoffen durch Zerfasern des Holzes eine verbesserte Dämmwirkung erzielen. Die Zerfaserung z.B. von Hackschnitzeln erfolgt beispielsweise in einem Refiner. Die für das Trockenverfahren anschließend getrockneten Holzfasern werden in einem Zyklon separiert und über eine Bandwaage zu einem Fasermischer geleitet, in dem die Holzfasern, in der Regel Nadelholzfasern, mit Bindefasern aus Kunststoff vermischt werden. Über eine Streumaschine gelangt die Fasermischung auf ein umlaufendes Förderband. Hier kann die Dichte mit Hilfe eines Röntgenscanners bestimmt und das Vlies mit einer Einrichtung zur Vereinheitlichung der Materialverteilung homogenisiert werden. Die Höhe des Vlieses wird über zwei parallel umlaufende Bänder eingestellt, deren Abstand zueinander einstellbar ist. Unter dem leichten Druck der Bänder wird das Vlies, das von Heißluft durchströmt wird, um die thermische Aktivierung von Bindefasern zu erreichen. Solche Holzfaserdämmstoffe werden als Platten, Matten oder in loser Form hergestellt, wobei vergleichsweise große Dicken von 20 mm bis 300 mm bei Rohdichten zwischen 40 kg/m3 bis 230 kg/m3 hergestellt werden.

Aus der DE 10 2004 062 649 B4 sind Verfahren zur Herstellung von Holzfaserdämmstoffplatten bzw. Holzfaserdämmstoffmatten bekannt, bei denen Holzfasern und Bindefasern aus Ballenöffnern gleichmäßig in eine Blasleitung eingeführt und pneumatisch durch eine Blasleitung einem Vorratsbehälter zugeführt werden. Aus dem Vorratsbehälter wird das Fasergemisch auf ein erstes Transportband aufgeblasen, dabei werden die Fasern räumlich ausgerichtet. Das erhaltene Vlies wird am Ende des ersten Transportbandes zerfasert und nach nochmaliger Vermischung auf ein zweites Transportband unter räumlicher Ausrichtung der Fasern aufgeblasen. Die Dicke der erhaltenen Matte wird durch die Umlaufgeschwindigkeit des zweiten Transportbandes eingestellt. Das so erhaltene Produkt wird auf ein Ofenband geführt und auf diesem durch einen Heizofen und einen Kühlofen gefahren. In diesen erfolgt die Erweichung der Bindefasern und damit eine innige Verklebung der Holzfasern und eine Einstellung der endgültigen Dicke der Holzfaserdämmstoffplatte bzw. Holzfaserdämmstoffmatte und das Abkühlen. Es kann auch ein Kunststoffgranulat zugegeben werden, das aus einem thermisch beständigen Kern und einer Umhüllung aus Kunstharzen besteht, die bei den in der Heizzone herrschenden Temperaturen erweichen.

Aus der DE 10 2008 039 720 A1 ist ein Verfahren zur Herstellung von Holzfaser-Dämmplatten bekannt, wobei Holzfasern mit thermoplastischen Kunststofffasern als Bindemittel gemischt werden. Aus dieser Mischung wird eine Fasermatte erzeugt, wobei als Kunstfasern Mehrkomponentenfasern verwendet werden, die aus zumindest einer ersten und einer zweiten Kunststoff-Komponente mit unterschiedlichen Schmelztemperaturen bestehen. Die Fasermatte wird erwärmt, sodass die zweite Komponente der Kunststofffasern erweicht wird. Zur Erwärmung wird Dampf oder ein Dampf-Luftgemisch durch die Fasermatte geleitet, wobei das Dampf-Luftgemisch einen vorgegebenen Taupunkt aufweist und die erste Komponente einen Schmelzpunkt oberhalb des Taupunktes und die zweite Komponente einen Schmelzpunkt unterhalb des Taupunktes aufweist.

Aus der WO 2002/22331 A1 ist ein Verfahren zur Herstellung von plattenförmigen Formelementen auf Naturfaserbasis bekannt, wobei Naturfasern mit Bindemitteln vermischt, die Mischung auf einer Formstation ausgebracht, gegebenenfalls ausgeformt und schließlich gebunden wird. Das Bindemittel wird in Form von wenigstens teilweise nach einer Aktivierung bindemittelbildender Körperelemente beigemischt. Die Körperelemente können Fasern sein, die aus Schmelzkleber gebildet sind.

Den Verfahren gemeinsam ist, dass frische Nadelhölzer zu Hackschnitzel zerkleinert und in einem thermomechanischen Verfahren in einem Refiner zerfasert und getrocknet werden. Solche Holzfasern stehen schon derzeit nicht in beliebiger Menge zur Verfügung und werden wegen des Klimawandels in deutlich geringeren Mengen für eine Zerkleinerung nur noch zur Verfügung stehen. Darüber hinaus sind die Mehrkomponentenfasern mit einem Kunststoffanteil versehen, sodass eine ökologische Problematik vorliegt. Der Kunststoffanteil ist nicht oder kaum biologisch abbaubar, was das Problem des Mikroplastiks in der Umwelt vergrößert.

Die WO 2020/068151 A1 betrifft einen Vliesstoff, der Holzstoff und Bi-Komponentenfasern enthält. Die Bi-Komponentenfasern bestehen beispielsweise aus den Kunststoffen PLA und PBS und weisen eine Mantel-Kern-Anordnung auf.

Die Mantelkomponente schmilzt während der thermischen Verklebung und sorgt so für eine Verfestigung des Faservlieses. Als Holzstoff werden Zellulosefasern aus Laubholz verwendet.

Die US 2010/272938 A1 betrifft hydraulisch geformte Vliesstoffplatten zur Verwendung als Umhüllungen oder Schutzbarrieren. Die Vliesstoffplatten weisen Zellulosefasern und nicht-zellulosehaltige Polymerfasern auf. Als Zellulosefasern werden Laubholzfasern, insbesondere Buchenfasern, verwendet. Die Polymerfasern sind als Bi-Komponentenfasern bestehend aus Polyester und PLA ausgeführt. Die Bi-Komponentenfasern weisen eine Mantel-Kern-Anordnung auf. Zur thermischen Verklebung wird ein Bindematerial verwendet, das durch Wärme aktiviert wird und aus biologisch abbaubaren Bi-Komponentenfasern besteht.

Die EP 2 048 295 A2 betrifft ein biologisch abbaubares Wärmedämmmaterial, das Holzfasern und ein biologisch abbaubares Bindemittel aufweist. Als Holzfasern werden beispielsweise Ahornfasern oder Buchenfasern verwendet. Das biologisch abbaubare Bindemittel besteht aus Bi-Komponentenfasern, die aus mehreren synthetischen Stoffen zusammengesetzt ist. Im Zuge der Herstellung werden die Holzfasern mit dem faserförmigen Bindemittel thermisch fixiert.

Die EP 2 743 292 A1 betrifft ein Verfahren zur Herstellung von Faserdämmstoffen mit Holzfasern und thermoplastischen Fasern. Als thermoplastische Fasern werden Bi-Komponentenfasern, insbesondere Bi-Komponentenfasern auf Basis von PLA (poly lactic acid), mit einer Mantelkomponente und einer Kernkomponente verwendet, wobei die Mantelkomponente bei einer Temperatur von unterhalb 100 °C zu schmelzen beginnt und die Kernkomponente bis ca. 250 °C temperaturstabil ist. Durch ein Schmelzen der Mantelkomponente wird eine Verklebung mit den Holzfasern erreicht.

Aufgabe der vorliegenden Erfindung ist es, ein Holzfaserdämmstoffprodukt sowie ein Verfahren zu dessen Herstellung anzugeben, das ökologisch vorteilhaft ist.

Erfindungsgemäß wird diese Aufgabe durch ein Verfahren mit den Merkmalen des Hauptanspruches und ein Holzfaserdämmstoffprodukt mit den Merkmalen des nebengeordneten Anspruchs gelöst. Vorteilhafte Ausgestaltungen und Weiterbildungen der Erfindung sind in den Unteransprüchen und der Beschreibung offenbart.

Das Verfahren zur Herstellung von flexiblen oder elastischen Holzfaserdämmstoffprodukten, insbesondere Holzfaserdämmstoffmatten, Holzfaserdämmstoffplatten oder auch Füllungen von Baustoffen wie Hohlziegel, sieht zunächst das Bereitstellen von Holzfasern vor, die in einem Refiner erzeugt werden, darüber hinaus das Bereitstellen von Mehrkomponentenfasern mit einer inneren und einer äußeren Komponente, wobei die äußere Komponente bei einer Schmelztemperatur schmilzt oder anschmilzt, bei der die innere Komponente nicht schmilzt oder anschmilzt, weiterhin das Bereitstellen einer Mischung von Holzfasern und Mehrkomponentenfasern und das Erwärmen der Mischung auf eine Temperatur, bei der die äußere Komponente schmilzt oder anschmilzt sowie das Verbinden der Mehrkomponentenfasern miteinander und/oder mit den Holzfasern beim Abkühlen der Mischung, wobei als Holzfasern Laubholzfaserbündel, insbesondere Buchenholzfaserbündel und als Mehrkomponentenfasern biologisch abbaubare Mehrkomponentenfasern verwendet werden und dass für die innere Komponente ein nicht schmelzendes Material in Gestalt von Fasern aus einem nachwachsenden Material verwendet wird. Die Verwendung sowohl von Holzfaserbündeln als auch von biologisch abbaubaren Mehrkomponentenfasern hat den Vorteil, dass das Holzfaserdämmstoffprodukt vollständig biologisch abbaubar ist und darüber hinaus mit Rohstoffen auskommt, die in einer ausreichenden Verfügbarkeit vorhanden sind. Insbesondere Nadelhölzer sind in dem Bestand aufgrund der klimatischen Änderungen gefährdet, Laubhölzer jedoch sind ausreichend verfügbar und dem klimatischen Wandel weniger stark unterworfen. Die Bewirtschaftung von Nutzwäldern hat sich bereits geändert, so dass Mischwälder bevorzugt werden, was sich jedoch aufgrund der langen Erneuerungszyklen erst in einigen Jahrzehnten spürbar auswirkt. Die Mehrkomponentenfasern können sowohl thermisch als auch mikrobiell oder durch Pilze abgebaut werden und sind insbesondere kompostierbar, sodass eine einfache Entsorgung nicht mehr benötigter Holzfaserdämmstoffprodukte möglich ist. Die Holzfasern werden dabei nicht, wie in herkömmlichen Verfahren, zu einzelnen Holzfasern zerkleinert, sondern als Laubholzfaserbündel belassen, wodurch eine Erzeugung von Feinmaterial bei der Herstellung der notwendigen Ausgangsmaterialien vermieden wird. Auf diese Weise lassen sich ausreichend formstabile, flexible und insbesondere elastische Holzfaserdämmstoffprodukte, insbesondere Matten oder Platten herstellen. Die Mehrkomponentenfasern verbinden sich nach dem Aufschmelzen insbesondere sowohl miteinander als auch mit den Holzfasern und bilden ein Gerüst und Verbindungsstellen, an denen die Holzfasern und andere Mehrkomponentenfasern beim Abkühlen klebend gehalten werden.

Die Laubholzfaserbündel werden in dem Refiner in einer Weiterbildung in einer Länge zwischen 0,5 mm und 10 mm und einer Breite von 0,1 mm und 2 mm hergestellt und anschließend mit den Mehrkomponentenfasern als Bindefasern vermischt. Dabei ist der Hauptteil der verwendeten Holzfasern in diesem Größenbereich, also mehr als 50%, insbesondere mehr als 75% der eingesetzten Holzfasern, sodass eine homogene Holzfaserdämmstoffplatte oder ein homogenes Holzfaserdämmstoffprodukt erzeugt wird. Das heißt, dass der Faserfeinanteil der Holzfasern durch einen größeren Abstand der Refiner-Mahlplatten möglichst klein gehalten wird.

Die äußere Komponente weist vorteilhafterweise eine Schmelztemperatur von unter 100°C auf, insbesondere von unter 70°C, da eine Schmelztemperatur von unterhalb 100°C bei industriellen Kompostieranlagen als oberer Grenzwert gilt, bis zu dem eine Entzündungsgefahr als beherrschbar oder vernachlässigbar eingestuft wird.

Die innere Komponente kann in einer Variante als eine Biofaser ausgebildet sein, beispielsweise aus Flachs, Hanf, Sisal, Jute oder dergleichen, die vollständig oder teilweise mit der äußeren Komponente ummantelt ist. Alternativ kann, nicht gemäß der beanspruchten Erfindung, ein biologisch abbaubares Polyamid als innere Komponente verwendet werden, die eine ausreichende Flexibilität und Elastizität des hergestellten Produktes bereitstellen kann.

Als äußere Komponente der Mehrkomponentenfaser ist in einer Weiterbildung die Verwendung von Polylactiden vorgesehen, die auf Milchsäurebasis aufgebaut sind und eine einfache Verarbeitbarkeit in Verbindung mit einer biologischen Abbaubarkeit ermöglichen.

In einer Variante werden nicht mehr als 7,5 % Mehrkomponentenfasern bezogen auf die Masse der Holzfasern verwendet, um einerseits den Verbrauch von Klebstoffen zu verringern und andererseits die notwendige Energie zum Aktivieren der äußeren Komponente möglichst gering zu halten. Darüber hinaus werden mit dem geringen Anteil an Mehrkomponentenfasern eine Kostenverringerung und die biologische Abbaubarkeit verbessert.

Die Mehrkomponentenfasern können mit den Holzfasern in einer Blowline vermischt werden. Erfindungsgemäß ist vorgesehen, dass die Vermischung von Mehrkomponentenfasern mit Holzfasern mit einer Stachelwalze erfolgt. Nicht erfindungsgemäß kann die Vermischung in einem Zyklon und/oder, erfindungsgemäß, in einer Hammermühle ohne Sieb erfolgen. Nach dem Mischen der Mehrkomponentenfasern mit den Holzfasern wird diese Mischung in eine Form eingebracht und dort erwärmt. Alternativ kann insbesondere bei der Herstellung von Platten oder Matten die Mischung auf ein Siebband oder Förderband gestreut und unter Aufbringung von geringem Druck auf die gewünschte Höhe gebracht und gleichzeitig erwärmt und anschließend abgekühlt werden, sodass ein Produkt mit den gewünschten Endeigenschaften und Endabmessungen nach dem Abkühlen bereitgestellt ist. Die Mischung kann beispielsweise auch in einen zu isolierenden Körper eingebracht werden, beispielsweise einen Hohlziegel, der anschließend erwärmt und abgekühlt wird und dann eine innere Füllung mit dem Holzfaserdämmstoff hat.

Vor dem Erwärmen, insbesondere auch vor dem Vermischen mit den Mehrkomponentenfasern können die Holzfasern mit einem Brandschutzmittel und/oder einer Wasserimprägnierung versehen werden, um die Eigenschaften des Endproduktes zu modifizieren und einzustellen. Insbesondere werden solche Additive in einer Blowline, also einer pneumatischen Förderanlage zugegeben, um eine gleichmäßige Durchmischung und Benetzung bzw. Imprägnierung der Holzfasern bzw. Laubholzfaserbündel zu erzielen.

In einer Weiterbildung ist vorgesehen, dass das Fasergemisch entlang einer Hauptebene, beispielsweise Plattenhauptebene, Produkthauptebene oder Mattenhauptebene ausgerichtet wird, beispielsweise durch einen Luftstrom oder eine elektrostatische Aufladung, sodass ein überwiegend großer Anteil an Fasern parallel zu einer Plattenebene orientiert ist. Dabei sind selbstverständlich senkrecht zu der Hauptebene oder Plattenebene orientierte Fasern vorhanden, um eine porige Struktur des Endproduktes zu erreichen und die im Wesentlichen parallel zueinander orientierten Faserebenen voneinander zu beabstanden. Durch eine solche Ausrichtung des Fasergemisches in der Plattenebene wird eine verbesserte Isolierwirkung erreicht, da die Wärmeleitung längs und quer zur Faserorientierung sich um den Faktor 2 unterscheiden. Die Ausrichtung der Fasern kann beispielsweise durch ein Ansaugen auf ein Sieb und eine entsprechende Luftführung erfolgen.

Eine Weiterbildung sieht vor, dass das Dämmstoffprodukt mit einer Dichte in einem Bereich zwischen 35 kg/m³ und 75 kg/m³ erzeugt wird, wobei auf die Mischung vor dem Erwärmen ein leichter Druck aufgebracht wird oder werden kann, um einen ausreichenden Kontakt der Fasern miteinander beim Erwärmen zu gewährleisten. Die äußere Komponente kann über heiße Luft, heißen Dampf, Mikrowellen und/oder Hochfrequenzstrahlung erwärmt werden, wobei die eingestellte Temperatur gerade ausreichend ist, um die äußere Komponente aufzuschmelzen oder anzuschmelzen und eine ausreichende Verklebung mit den anderen Mehrkomponentenfasern und den Laubholzfaserbündeln zu ermöglichen.

Zur Herstellung einer Dämmstoffplatte oder einer Dämmstoffmatte wird ein Faservlies aus den Holzfasern und den Mehrkomponentenfasern auf ein umlaufend geführtes Förderband aufgestreut und in einem kontinuierlichen Herstellverfahren verdichtet und erwärmt, wobei insbesondere ein Siebband-Durchlaufofen mit einer eingebauten Pressfunktion verwendet wird, ohne dass ein hoher Druck oder eine hohe Verdichtung auf das Faservlies ausgeübt wird.

Das Holzfaserdämmstoffprodukt mit Holzfasern, die einem Refiner erzeugt wurden, und Mehrkomponentenfasern mit einer inneren und einer äußeren Komponente, wobei die äußere Komponente bei einer Schmelztemperatur schmilzt oder anschmilzt, bei der die innere Komponente nicht schmilzt oder anschmilzt und Holzfasern und Mehrkomponentenfasern durch Erwärmen und Schmelzen oder Anschmelzen der äußeren Komponente und anschließendes Abkühlen miteinander verbunden sind, sieht vor, dass als Holzfasern Laubholzfaserbündel, insbesondere Buchenholzfaserbündel und als Mehrkomponentenfasern biologisch abbaubare Mehrkomponentenfasern verwendet werden und dass die innere Komponente als ein nicht schmelzendes Material in Gestalt von Fasern aus einem nachwachsenden Material ausgebildet ist. Das Holzfaserdämmstoffprodukt kann als Platte oder Matte ausgebildet sein, wobei die Fasern, sowohl die Mehrkomponentenfasern als auch die Laubholzfaserbündel zumindest bereichsweise überwiegend entlang einer Hauptebene einer Platte oder Matte ausgerichtet sind. Dadurch wird die Dämmwirkung verbessert.

Das Holzfaserdämmstoffprodukt weist in einer Ausgestaltung eine Dichte in einem Bereich zwischen 35 kg/m³ und 75 kg/m³ auf, wobei die äußere Komponente einen Schmelzpunkt kleiner als 100°C, bevorzugt kleiner als 70°C aufweist. Bei einem solch niedrigen Schmelzpunkt ist es möglich, die biologisch abbaubare äußere Komponente, beispielsweise ein Polylactid im Rahmen eines Kompostierverfahrens biologisch abzubauen.

Die Mehrkomponentenfasern weisen in einer Ausgestaltung ein Gewichtsanteil von weniger als 7,5%, insbesondere einen Masseanteil von 2,5% oder 5% der Masse der Holzfasern auf, wodurch die Kosten für das Gesamtprodukt reduziert werden, da die vergleichsweise teuren Mehrkomponentenfasern nur zu einem geringen Teil eingesetzt werden.

Eine Weiterbildung sieht vor, dass das Holzfaserdämmstoffprodukt flexibel, insbesondere elastisch ausgebildet ist und insbesondere als Zwischensparrendämmung zur Wärmedämmung von Dächern eingesetzt werden kann. Darüber hinaus kann das Dämmstoffprodukt als Verpackungsmaterial aufgrund der elastischen Eigenschaften eingesetzt werden, um so Kunststoffverpackungsmaterial zu ersetzen oder zu reduzieren.

## Patentansprüche

1. Verfahren zur Herstellung von flexiblen oder elastischen
Holzfaserdämmstoffprodukten, das folgende Schritte aufweist:
- Bereitstellen von Holzfasern, die in einem Refiner erzeugt wurden,
- Bereitstellen von Mehrkomponentenfasern mit einer inneren und einer äußeren Komponente, wobei die äußere Komponente bei einer Schmelztemperatur schmilzt oder anschmilzt, bei der die innere Komponente nicht schmilzt oder anschmilzt,
- Bereitstellen einer Mischung von Holzfasern und Mehrkomponentenfasern
- Erwärmen der Mischung auf eine Temperatur, bei der die äußere Komponente schmilzt oder anschmilzt und
- Verbinden der Mehrkomponentenfasern miteinander und mit den Holzfasern beim Abkühlen der Mischung, wobei als Holzfasern Laubholzfaserbündel, insbesondere Buchenholzfaserbündel, und als Mehrkomponentenfasern biologisch abbaubare Mehrkomponentenfasern verwendet werden, **dadurch gekennzeichnet, dass** für die innere Komponente ein nicht schmelzendes Material in Gestalt von Fasern aus einem nachwachsenden Material verwendet wird und dass die Mehrkomponentenfasern mit den Holzfasern mit einer Stachelwalze und/oder in einer Hammermühle ohne Sieb vor einem Einbringen in eine Form oder einem Aufstreuen auf ein Pressband vermischt werden.

2. Verfahren nach Anspruch 1, **dadurch gekennzeichnet, dass** die Laubholzfaserbündel in dem Refiner in einer Länge zwischen 0,5 mm und 10 mm und einer Breite von 0,1 mm bis 2 mm hergestellt werden.

3. Verfahren nach Anspruch 1 oder 2, **dadurch gekennzeichnet, dass** die äußere Komponente eine Schmelztemperatur von unter 100°C aufweist.

4. Verfahren nach einem der voranstehenden Ansprüche, **dadurch gekennzeichnet, dass** für die innere Komponente als nachwachsendes Material Flachs, Hanf, Jute und/oder Sisal verwendet wird.

5. Verfahren nach einem der voranstehenden Ansprüche, **dadurch gekennzeichnet, dass** als äußere Komponente der Mehrkomponentenfasern Polylactide verwendet werden.

6. Verfahren nach einem der voranstehenden Ansprüche, **dadurch gekennzeichnet, dass** nicht mehr als 7,5% Mehrkomponentenfasern bezogen auf die Masse der Holzfasern verwendet werden.

7. Verfahren nach einem der voranstehenden Ansprüche, **dadurch gekennzeichnet, dass** die Holzfasern mit einem Brandschutzmittel und/oder einer Wasserimprägnierung versehen werden.

8. Verfahren nach einem der voranstehenden Ansprüche, **dadurch gekennzeichnet, dass** das Fasergemisch vor dem Erwärmen entlang einer Plattenhauptebene ausgerichtet wird.

9. Verfahren nach einem der voranstehenden Ansprüche, **dadurch gekennzeichnet, dass** damit ein Dämmstoffprodukt mit einer Dichte in einem Bereich zwischen 35 kg/m³ und 75 kg/m³ erzeugt wird.

10. Verfahren nach einem der voranstehenden Ansprüche, **dadurch gekennzeichnet, dass** die äußere Komponente über heiße Luft, heißen Dampf, Mikrowellen und/oder Hochfrequenzstrahlung erwärmt wird.

11. Verfahren nach einem der voranstehenden Ansprüche, **dadurch gekennzeichnet, dass** zur Herstellung einer Dämmstoffplatte oder Dämmstoffmatte ein Faservlies auf ein umlaufend geführtes Förderband aufgestreut und in einem kontinuierlichen Herstellverfahren verdichtet und erwärmt wird.

12. Holzfaserdämmstoffprodukt mit Holzfasern, die in einem Refiner erzeugt wurden, und Mehrkomponentenfasern mit einer inneren und einer äußere Komponente, wobei die äußere Komponente bei einer Schmelztemperatur schmilzt oder anschmilzt, bei der die innere Komponente nicht schmilzt oder anschmilzt und Holzfasern und Mehrkomponentenfasern durch Erwärmen und Schmelzen oder Anschmelzen der äußere Komponente und anschließendes Abkühlen miteinander verbunden sind, wobei als Holzfasern Laubholzfasernbündel, insbesondere Buchenholzfaserbündel und als Mehrkomponentenfasern biologisch abbaubare Mehrkomponentenfasern verwendet werden, **dadurch gekennzeichnet, dass** die innere Komponente als ein nicht schmelzendes Material in Gestalt von Fasern aus einem nachwachsenden Material ausgebildet ist und die Mehrkomponentenfasern mit den Holzfasern mit einer Stachelwalze und/oder in einer Hammermühle ohne Sieb vor einem Einbringen in eine Form oder einem Aufstreuen auf ein Pressband vermischt worden sind.

13. Holzfaserdämmstoffprodukt nach Anspruch 12, **dadurch gekennzeichnet, dass** das Holzfaserdämmstoffprodukt als Platte oder Matte ausgebildet ist und die Fasern zumindest bereichsweise überwiegend entlang einer Hauptebene der Platte oder Matte ausgerichtet sind.

14. Holzfaserdämmstoffprodukt nach einem der Ansprüche 12 oder 13, **dadurch gekennzeichnet, dass** es eine Dichte in einem Bereich zwischen 35 kg/m³ und 75 kg/m³aufweist.

15. Holzfaserdämmstoffprodukt nach einem der Ansprüche 12 bis 14, **dadurch gekennzeichnet, dass** die äußere Komponente eine Schmelztemperatur kleiner als 100°C, bevorzugt kleiner 70°C aufweist.

16. Holzfaserdämmstoffprodukt nach einem der Ansprüche 12 bis 15, **dadurch gekennzeichnet, dass** die Mehrkomponentenfasern einen Masseanteil von weniger als 7,5%, bevorzugt zwischen 2,5% und 7,5% ausmachen.

17. Holzfaserdämmstoffprodukt nach einem der Ansprüche 12 bis 16, **dadurch gekennzeichnet, dass** es flexibel oder elastisch ausgebildet ist.

## Claims

1. A method for producing flexible or elastic wood fiber insulant products, which has steps as follows:
- providing wood fibers which have been produced in a refiner,
- providing multicomponent fibers having an inner and an outer component, the outer component melting or starting to melt at a melting temperature at which the inner component does not melt or start to melt,
- providing a mixture of wood fibers and multicomponent fibers,
- heating the mixture to a temperature at which the outer component melts or starts to melt, and
- joining the multicomponent fibers to one another and to the wood fibers on cooling of the mixture, **wherein** wood fibers used comprise hardwood fiber bundles, more particularly beechwood fiber bundles, and multicomponent fibers used comprise biodegradable multicomponent fibers, **characterized in that** a renewable material is used for the inner component and that the multicomponent fibers are mixed with the wood fibers with a pin roll and/or in a hammer mill without sieve before introduction into a mold or scattering onto a press belt.

2. The method as claimed in claim 1, **characterized in that** the hardwood fiber bundles are produced in the refiner in a length between 0.5 mm and 10 mm and a width of 0.1 mm to 2 mm.

3. The method as claimed in claim 1 or 2, **characterized in that** the outer component has a melting temperature of below 100°C.

4. The method as claimed in any of the preceding claims, **characterized in that** as a renewable material flax, hemp, jute and/or sisal is used for the inner component.

5. The method as claimed in any of the preceding claims, **characterized in that** polylactides are used as outer component of the multicomponent fibers.

6. The method as claimed in any of the preceding claims, **characterized in that** not more than 7.5% of multicomponent fibers are used, based on the mass of the wood fibers.

7. The method as claimed in any of the preceding claims, **characterized in that** the wood fibers are provided with a flame retardant and/or with water impregnation.

8. The method as claimed in any of the preceding claims, **characterized in that** the fiber mixture before the heating is oriented along a principal board plane.

9. The method as claimed in any of the preceding claims, **characterized in that** it is used to produce an insulant product having a density in a range between 35 kg/m³ and 75 kg/m³.

10. The method as claimed in any of the preceding claims, **characterized in that** the outer component is heated via hot air, hot steam, microwaves and/or high-frequency radiation.

11. The method as claimed in any of the preceding claims, **characterized in that** an insulant board or insulant mat is produced by scattering a fiber web onto a circulated conveyor belt and compressing and heating it in a continuous production process.

12. A wood fiber insulant product with wood fibers, which have been produced in a refiner, and with multicomponent fibers having an inner and an outer component, the outer component melting to starting to melt at a melting temperature at which the inner component does not melt or start to melt, and wood fibers and multicomponent fibers are joined to one another by heating and melting or incipient melting of the outer component and subsequent cooling, wherein wood fibers used comprise hardwood fiber bundles, more particularly beechwood fiber bundles, and multicomponent fibers used comprise biodegradable multicomponent fibers, **characterized in that** a renewable material is used for the inner component and that the multicomponent fibers were mixed with the wood fibers with a pin roll and/or in a hammer mill without sieve before introduction into a mold or scattering onto a press belt.

13. The wood fiber insulant product as claimed in claim 12, **characterized in that** the wood fiber insulant product is configured as a board or mat and the fibers at least regionally are oriented predominantly along a principal plane of the board or mat.

14. The wood fiber insulant product as claimed in either of claims 12 and 13, **characterized in that** it has a density in a range between 35 kg/m³ and 75 kg/m³.

15. The wood fiber insulant product as claimed in any of claims 12 to 14, **characterized in that** the outer component has a melting temperature of less than 100°C, preferably less than 70°C.

16. The wood fiber insulant product as claimed in any of claims 12 to 15, **characterized in that** the multicomponent fibers account for a mass fraction of less than 7.5%, preferably between 2.5% and 7.5%.

17. The wood fiber insulant product as claimed in any of claims 12 to 16, **characterized in that** it is of flexible or elastic configuration.

## Revendications

1. Procédé de fabrication de produits isolants flexibles ou élastiques à base de fibres de bois, comprenant les étapes suivantes consistant à :
- fournir des fibres de bois qui ont été produites dans un raffineur,
- fournir des fibres à plusieurs composants, ayant un composant interne et un composant externe, le composant externe fondant ou fondant superficiellement à une température de fusion à laquelle le composant interne ne fond pas ou ne fond pas superficiellement,
- fournir un mélange de fibres de bois et de fibres à plusieurs composants,
- chauffer le mélange à une température à laquelle le composant externe fond ou fond superficiellement, et
- relier les fibres à plusieurs composants entre elles et avec les fibres de bois lors du refroidissement du mélange,
sachant que l'on utilise comme fibres de bois des faisceaux de fibres de bois de feuillus, en particulier des faisceaux de fibres de hêtre, et comme fibres à plusieurs composants des fibres à plusieurs composants biodégradables,
**caractérisé en ce que** l'on utilise pour le composant interne un matériau non fusible sous forme de fibres d'un matériau renouvelable, et **en ce que** l'on mélange les fibres à plusieurs composants avec les fibres de bois à l'aide d'un rouleau à pointes et/ou dans un broyeur à marteaux dépourvu de tamis, avant de les introduire dans un moule ou de les répandre sur une bande de pressage.

2. Procédé selon la revendication 1,
**caractérisé en ce que** les faisceaux de fibres de bois de feuillus sont produits dans le raffineur en une longueur comprise entre 0,5 mm et 10 mm et en une largeur de 0,1 mm à 2 mm.

3. Procédé selon la revendication 1 ou 2,
**caractérisé en ce que** le composant externe présente une température de fusion inférieure à 100 °C.

4. Procédé selon l'une des revendications précédentes,
**caractérisé en ce que** l'on utilise pour le composant interne, à titre matériau renouvelable, du lin, du chanvre, du jute et/ou du sisal.

5. Procédé selon l'une des revendications précédentes,
**caractérisé en ce que** l'on utilise des polylactides comme composant externe des fibres à plusieurs composants.

6. Procédé selon l'une des revendications précédentes,
**caractérisé en ce que** l'on n'utilise pas plus de 7,5 % de fibres à plusieurs composants par rapport à la masse des fibres de bois.

7. Procédé selon l'une des revendications précédentes,
**caractérisé en ce que** les fibres de bois sont pourvues d'un agent ignifugeant et/ou d'une imprégnation à l'eau.

8. Procédé selon l'une des revendications précédentes,
**caractérisé en ce que** le mélange de fibres est orienté le long d'un plan principal du panneau avant d'être chauffé.

9. Procédé selon l'une des revendications précédentes,
**caractérisé en ce qu'**il permet d'obtenir un produit isolant ayant une densité dans une plage comprise entre 35 kg/m³ et 75 kg/m³.

10. Procédé selon l'une des revendications précédentes,
**caractérisé en ce que** le composant externe est chauffé par de l'air chaud, de la vapeur chaude, des micro-ondes et/ou par un rayonnement à haute fréquence.

11. Procédé selon l'une des revendications précédentes,
**caractérisé en ce que**, pour la fabrication d'un panneau en matériau isolant ou d'un matelas en matériau isolant, une nappe de fibres est répandue sur une bande transporteuse guidée en révolution et est comprimée et chauffée dans un procédé de fabrication en continu.

12. Produit isolant à base de fibres de bois ayant des fibres de bois qui ont été produites dans un raffineur et des fibres à plusieurs composants avec un composant interne et un composant externe, le composant externe fondant ou fondant superficiellement à une température de fusion à laquelle le composant interne ne fond pas ou ne fond pas superficiellement, et les fibres de bois et les fibres à plusieurs composants étant reliées entre elles par chauffage et par fusion ou par fusion superficielle du composant externe et par refroidissement ultérieur,
sachant que l'on utilise comme fibres de bois des faisceaux de fibres de bois de feuillus, en particulier des faisceaux de fibres de hêtre, et comme fibres à plusieurs composants des fibres à plusieurs composants biodégradables, **caractérisé en ce que** le composant interne est réalisé comme un matériau non fusible sous forme de fibres d'un matériau renouvelable, et les fibres à plusieurs composants sont mélangées avec les fibres de bois à l'aide d'un rouleau à pointes et/ou dans un broyeur à marteaux dépourvu de tamis, avant d'être introduites dans un moule ou d'être répandues sur une bande de pressage.

13. Produit isolant à base de fibres de bois selon la revendication 12, **caractérisé en ce que** le produit isolant à base de fibres de bois est réalisé sous la forme d'un panneau ou d'un matelas, et les fibres sont orientées, au moins localement, principalement le long d'un plan principal du panneau ou du matelas.

14. Produit isolant à base de fibres de bois selon l'une des revendications 12 ou 13,
**caractérisé en ce qu'**il présente une densité dans une plage comprise entre 35 kg/m³ et 75 kg/m³.

15. Produit isolant à base de fibres de bois selon l'une des revendications 12 à 14,
**caractérisé en ce que** le composant externe présente une température de fusion inférieure à 100 °C, de préférence inférieure à 70 °C.

16. Produit isolant à base de fibres de bois selon l'une des revendications 12 à 15,
**caractérisé en ce que** les fibres à plusieurs composants représentent une part de masse inférieure à 7,5 %, de préférence comprise entre 2,5 % et 7,5 %.

17. Produit isolant à base de fibres de bois selon l'une des revendications 12 à 16,
**caractérisé en ce qu'**il est flexible ou élastique.
